# EUROPEAN PATENT APPLICATION

(11) **EP 1 646 016 A2**
(43) Date of publication of application: **12.04.2006**
(21) Application number: 05028309.2
(22) Date of filing: 13.11.2001
(51) Int. Cl.: G07F 7/00

(54) **Transaction processing and inter-computer communications**

(30) Priority: 13.11.2000 IE 20000907; 13.11.2000 IE 20000908; 13.11.2000 GB 0027681; 17.11.2000 IE 20000935; 17.11.2000 IE 20000956; 17.11.2000 GB 0280083; 17.11.2000 IE 20000936
(62) Divisional of application: 01980849.2
(71) Applicant: Murphy, Francis Enda, Killarney, County Kerry (IE); Murphy, Edward, Ballsbridge, Dublin 4 (IE)
(72) Inventor: Murphy, Francis Enda, Killarney, County Kerry (IE); Murphy, Edward, Ballsbridge, Dublin 4 (IE)
(74) Representative: McCarthy, Denis Alexis

(57) **Abstract**

The present invention relates to processing of credit card transactions where conversion to the cardholder currency is securely and efficiently processed at a point of sale apparatus or at a merchant site into a cardholder currency. The number of currency exchanges is reduced thereby benefiting cardholders and eliminating merchant foreign exchange exposure. Competitive merchant service charges (MCS) are also possible in addition to enhancing the trust and confidence of cardholders.

## Description

The invention relates to transaction processing, and more particularly to charge, credit and debit card transaction processing and to an inter-computer communications apparatus and more particularly to a method for improving the efficiency and transparency of communications between computer systems in relation to transaction processing.

Card transaction processing requires the communication of data from a number of disparate and often geographically remote point of sale sources to a local or target processing computer system. This communication is required for authentication and validation as well as for account reconciliation purposes. Proprietary systems, operating in a strictly controlled environment such as a store charge card present little difficulties to operators as the points of sale and account rationalisation can be strictly controlled and changed if necessary. However, to process transactions from magnetic card readers located in merchant outlets throughout the world, far more processing power is required. This processing demand is further increased by the variety of cards that must be accommodated and by the number of currencies being presented. The mobility of card users means that an upparently simple transaction may involve two or more transaction conversions.

Fur example, a cardholder from one country who is normally billed for transactions on a card in a given user currency, may travel and obtain goods or services in a second country having a different or local currency. When paying, the cardholder signs a receipt for the transaction in the local currency. This transaction is then processed by the systems of the merchant and passed to an acquiring bank. Files for each merchant are amalgamated from each bank and introduced into a global system such as the Visa^{™} system. As the international settlement currency is the United States dollar, the transaction is converted from the local currency to the settlement currency from the acquiring bank. This settlement currency amount is then transmitted to the bank that issued the card to the cardholder for conversion into the user currency. Not with standing the possibility for error during transmission and the costs associated with each conversion the system has inherent delays. These delays and conversions adversely affect the cardholder.

The term "inter-computer communications" refers to communication between a number of data processing entities.

In many data processing systems, it is common to transfer data from between a number of disparate and often geographically remote sources to a local or target computer system. These sources frequently use different hardware and software platforms to comparable data sources and to the local target computer. The data may be transferred for storage, used to obtain information or for processing to provide a result, which is then te-transferred to the source. Such transfers have become extremely common with the emergence of both Internet and Intranet applications. When the hardware and software platforms of the remote sources are configured for this purpose or are identical this is relatively simple and error free. As the numbers of different hardware and software platforms increase, so too do the problems increase. When there are a large number of variations in such platforms it becomes virtually impossible to transfer data in a transparent manner, in that the data must be converted at each source, into a formal suitable for use by the local target computer. Even this is not suitable in all situations, for example when the source is not designed or configured for this type of operation having been developed over a long period of time. Such legacy systems contain large quantities of information, which may be required for the purposes outlined by the local system. Obviously owners of such source systems wish to unlock the information stored to enable users to fully exploit the new technologies. However, as the systems were not designed to operate in this manner this is problematic. This is particularly the case when it is necessary to connect to application processing elements on the legacy system.

One example of a situation where transparent and efficient communication of information between disparate and geographically remote processing entities is required occurs in the processing of credit card transactions. Card transaction processing requires the communication of data from a number of disparate and often geographically remote points of sale sources to a local or target processing computer system. This communication is required for authentication and validation as well as for account reconciliation purposes. Systems, operating in a well controlled environment such an a store charge card system present little difficulty to system operators as the points of sale and account rationalisation functions can be easily controlled and modified as required. Similarly, the range of formats of magnetic card readers in merchant outlets throughout the world while large is limited in the extent that certain internationally imposed standards must be complied with. Processing of credit card transactions in a "card not present" CNP environment is not forced to comply with such standards and a broad proliferation of mechanisms have developed. The variety of cards that must be accommodated and the number of currencies being presented, for example to a merchant operating on the internet moans that the merchant is normally compelled to outsource development of these processing functions. In order to make such developments cost effective, it is necessary for the developers to conduct the processing of the transaction at a central site. This imposes certain limits on both the merchant and on the merchant's customers. Merchants are effectively bound to the developer selected for processing of all credit card transactions as the inter computer communications between the merchant system and the developer system is usually proprietary for exactly this reason to protect the developer investment.

Additionally, the cardholder is forced to accept a large number of conversions on a given transaction, all of which cost money. A clarifying example of this is now described. A cardholder in Japan, billed in Japanese Yen, wishing to purchase goods or services from a Wcbsite in the United Kingdom, transmits the necessary credit card data to the site. This information is combined with the purchase details and presented to an acquiring bank as a Sterling pound total. Files for each merchant are amalgamated from each bank and introduced into a global credit card scheme such as the Visa^{™} system. As the international settlement currency for these schemes is the United States Dollar (USD), the transaction is converted from Sterling to USD. This settlement currency amount is then transmitted to the Japanese bank that issued the card to the cardholder for conversion into the user currency, namely Japanese Yen. The transaction has thus been converted from Sterling to Dollars and from dollars to Yen and it may be some time before the cardholder is informed of the actual price paid for the goods or services. As well as the costs of these transactions to the customer known systems have inherent delays. These delays and conversions adversely affect the cardholder.

There is therefore a need for a communication apparatus, which will provide communications between disparate data sources, which will overcome the aforementioned problems.

Accordingly, there is provided a method for processing a transaction using
a point-of-sale apparatus
a remote processor
an acquiring bank scheme and
an issuing bank authority
wherein conversion of the transaction to a financial amount into a currency associated with a card is performed at the point of sale apparatus and
wherein the conversion of the transaction comprises the steps of
extracting a credit card number from the presented transaction;
parsing the extracted credit card number to extract a country code identification word;
comparing the extracted identification word with a pre-defined index stack of identification words resident on a local database and in response to a match condition, retrieving a conversion rate multiplier associated with the country code identification word from the local datastore; and
applying the retrieved conversion rate multiplier to a local merchant currency amount to generate a billing figure.

Ideally, the method includes the further steps of: -
receiving a connection request from a point of sale apparatus at a remote processor;
retrieving exchange and associated data from a storage device of the remote processor;
replacing contents of the datastore with the retrieved data.

A method in accordance with the invention has a number of advantages over previously known solutions. Merchants using the invention have no foreign exchange exposure and the cardholders in turn have minimum exposure. This promotes user confidence and thus increases the commercial appeal of the merchant. As the number of conversions is reduced the acquirer can offer very competitive merchant service charges (MCS) a portion of which can be returned to the merchant to promote loyalty. The simplicity of the process can be readily explained to customers and thus trust and confidence are enhanced, furthermore there is not disturbance to the existing operational processes. Cardholders are more likely to buy goods and services from operators utilising the invention because of the reduced end cost and the transparency of seeing the amount to be debited in the appropriate currency at the point of sale.

The invention also provides an apparatus for processing a credit card transaction comprising a point-of-sale apparatus, a remote processor, an acquiring bank scheme and an issuing bank authority wherein the point of sale apparatus incorporates means for converting the transaction to a financial amount into a currency associated with a card and
wherein the means for converting the transaction, comprises: -
means for extracting a credit card number from the presented transaction;
means for parsing the extracted credit card number to extract a country code identification word;
means for comparing the extracted identification word with a predefined index stack of identification words resident on a local datastore;
means for retrieving a conversion rate multiplier associated with the country code identification word from the local datastore in response to a match condition between the extracted word and the predefined index stack of identification words; and
means for applying the retrieved conversion rate multiplier to a local merchant currency amount to generate a billing figure.

Conveniently, the apparatus includes means for receiving a connection request from a point of sale apparatus at a remote processor;
means for retrieving exchange and associated data from a storage device of the remote processor; and
means for replacing contents of the datastore with the retrieved data.
means for applying the retrieved rate to a local merchant currency amount to generate a billing figure.

Conveniently, the point of sale apparatus comprises a card swipe terminal unit or means for extracting the required information from a credit card internet transaction.

According to another aspect of the invention, there is provided an inter computer communications apparatus for use in an electronic commerce environment, the apparatus having
a processor and associated datastore for connection to a remote merchant system of the type having a processor and datastore, and
means for connection to a remote client system,
wherein the remote merchant system is configured to perform the steps of: -
receiving card information associated with a transaction request as a bitstream;
routing the received bitstream to a parsing register,
parsing register contents to extract an originating country identification word;
comparing an extracted identification word with a predefined index stack of identification words resident on the datastore in response to a match condition retrieving a conversion multiplier from the datastore; and
applying the multiplier to a transaction value to produce a final billing value for transmission to the cardholder and the client system.

Preferably, the apparatus incorporates means for performing the further steps of: -
generating a quotation currency selection request;
transmitting the generated request to the cardholder;
receiving a currency selection dataword and storing the dataword in a temporary security buffer; and
comparing the contents of the temporary security buffer with the indexed stack contents in response to a matched condition and generating an authorisation signal or request for validation signal.

According to a still further aspect of the invention there is provided a method for processing transactions in an electronic commerce environment comprising the steps of: -
receiving card information associated with a transaction request as a bitstream;
routing the received bitstream to a parsing register;
parsing register contents to extract an originating country identification word;
generating a quotation currency selection request;
transmitting the generated request to the cardholder;
receiving a currency selection dataword and storing the dataword in a temporary security buffer;
comparing an extracted identification word with a predefined index stack of identification words resident on the datastore in response to a match condition retrieving a conversion multiplier from the datastore;
comparing the contents of the temporary security buffer with the indexed stack contents in response to a matched condition and generating an authorisation signal or request for validation signal;
applying the multiplier to a transaction value in response to an authorization signal to produce a final billing value for transmission to a cardholder and a client system;

Ideally, the datastore contents are periodically updated from a remote server

The invention will be more clearly understood from the following description of embodiments thereof with reference to the accompanying drawings, given by way of example only, in which.
Fig. 1 is block diagram illustrating operation of transaction processing system; and
Fig. 2 is a block diagram illustrating operation of an inter-computer communications apparatus formed in accordance with the invention.

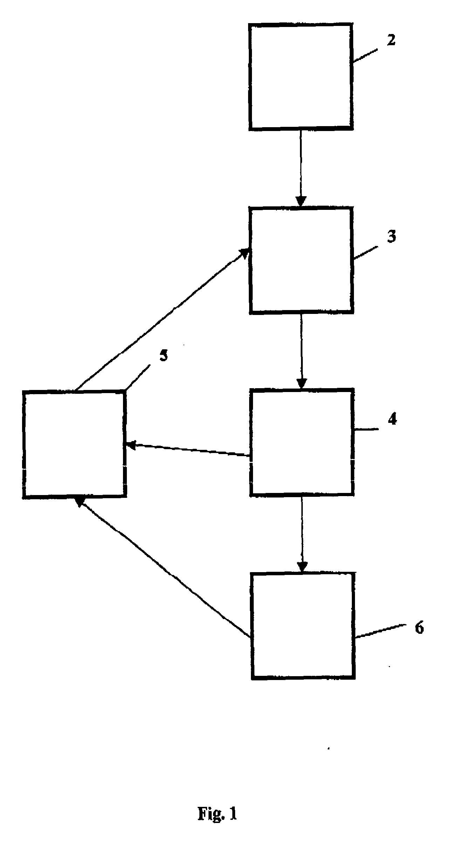

Referring to Figure 1, there is shown in operation, a transaction processing system of the invention indicated generally by the reference numeral 1. The system handles processing between a card 2 presented at a point-of-sale apparatus 3 located at a merchant's premises through a remote processor 4 and on to a card issuing bank authority through an acquiring bankcard scheme 5.

Before describing the method of the current invention further, the steps of processing prior art transactions are now described in brief. The example given is for a cardholder who is normally billed in Japanese Yen presenting a card in the United Kingdom whose currency is Sterling.
Step 1 the transaction is presented to the Japanese cardholder in Sterling.
Step 2 the Merchant passes the transaction to an Acquiring Bank
Step 3 the transaction is converted into the international settlement currency, namely, US dollars for transmission through the card schemes.
Step 4 the transaction is transmitted through the card schemes mechanism to the Card Issuing Bank.
Step 5 the card issuing bank a local Japanese currency amount, which is converted from the transmission US Dollar.

The transaction has therefore been through three conversion mechanisms and has three margins applied before being applied to a cardholder account.

The present invention overcomes these problems.

When a card holder presents the card for processing of a transaction the card is swiped through a terminal unit 3, as the card 2 is swiped certain details relating to the transaction and the card itself are received by the terminal unit 3. The terminal unit 3 then uses locally stored credit card information to extract from the bin number of the card a country identifier associated with that card. When the country identifier has been extracted and identified a currency conversion rate to a local currency being the currency of the merchant operating the terminal unit is applied to the charge associated with the transaction to give a card currency value for that transaction. The converted value being in the cardholder's currency is then transmitted to a remote processing station for this transaction is then processed through the normal credit card transaction processing system namely proceeding from the remote processing station to a credit card debit acquirer and from that acquirer through the various credit card issuing schemes back to the issuing bank. This issuing bank is the bank, which issued the card to the cardholder in the cardholder currency. The card holders account has an amount equivalent to the authorisation sought removed from the available card credit and authorisation for the request is returned through the credit card issuing bank, through the card schemes and though the debit acquirer to the remote server. A record of the amount of the transaction in cardholder currency and in merchant currency is stored in the point of sale apparatus. Once this authorisation has been received by the merchant the transaction can be processed in the normal way and authenticating signature obtained where appropriate.

At a preset interval or on request from the remote server transaction details are transferred from the point of sale apparatus to the remote server. When the transaction details are received from a given merchant, a file is created for the transaction details, this file contains a conversion rate for each transaction into each and every currency operated by the remote processor. This record is then transmitted, including details of the card issuer and card-issuing bank, to the acquiring bank and through the acquiring bank onto the various credit card issuing banks. These amounts are then reconciled against the cardholder's accounts and payment is returned through the issuing bank and acquirer to the remote processor. When the remote processor receives the transaction, the value of the transaction is returned to the remote processor in cardholder currency and is then converted at the appropriate rate to the merchant currency. The merchant currency amount is then settled to the merchants account in payment of the transaction. This amount maybe net of merchant service charge or maybe a gross figure.

When the transaction is originally processed the rate of conversion from the merchant currency to the cardholder currency is obtained on a three-day basis, this is the figure used plus a foreign exchange margin to convert from the merchant currency to the cardholder currency. When reconciling the account, the local processor, extracts details of this transaction and obtains a daily spot rate for conversion. In the event of such a transaction operated on the spot daily rate would yield a net benefit in conversion values then this excess is credited to a local account.

Settlement of the account with the merchant may have an additional component in that the profit margin on a given transaction may be stored in a foreign exchange profit holding account. This profit holding account may issue a dividend on each transaction in relation to the parties involved namely the remote server and the merchant operating the system.

In addition to the process described above it will be understood that the remote server may store locally information relating to the currency of the card presented for a given transaction. In this situation as the transaction is being processed by the merchant, it is routed to the local processor and details relating to the currency of the card account are retrieved from a datastore associated with the remote server.

The remainder of the operation is similar to that described above with the exception that the conversion from the merchant currency to the cardholder currency is performed at the remote processor. Obviously in this situation, the details relating to the transaction can be stored locally on the remote server and there is no requirement for an upload from the merchant point of sale apparatus.

In addition to the two methods and apparatus for processing of credit card transactions it will be understood that in certain "card not present" CNP environments such as in the rental of motor cars it will be possible for the electronic point of sale to process the transaction and transfer the currency in merchant currency in both in a batch process to the remote server for processing, conversion and onward processing of the transactions. The system may also work for Card Present, where the card issuing authorities permits local conversion of the currency.

Details relating to transaction to be processed maybe downloaded periodically or contemporaneously with a batch process to transfer information relating to country identification codes and exchange rates to be transferred from the local processor to the point of sale apparatus. Additionally, details relating to fraudulent use of credit cards maybe also be transferred from the local server to the point of sale apparatus if required.

Such details may include lists of stolen credit card numbers so that detection of the cards is immediate at the point of sale without reference to the remote processor.

In the circumstances where credit card transactions are being processed across a network such as the internet where no electronic points of sale systems exist, the conversions may be performed at a merchants or vendor site using details similar to that described with relation to the electronic point of sale apparatus being downloaded to a local merchants server. This information again includes details on currency identification codes associated with particular credit card numbers, conversion rates for range of currencies for which transactions are processed and details relating to stolen or fraudulently used credit cards. When a customer requests processing of a transaction it may be required for them to seek a request for a currency for which the charges are to be quoted. This may be alternatively be extracted automatically from a bin number of the credit card being presented. As an additional security for the overall system, the requested currency for quotation and the currency obtained from the bin number may be compared and in the event that a discrepancy arises further authentication of the transaction request maybe sought. Alternatively, in the event of such a mismatch a user warning may be generated to seek verification from the user that billing of the transaction is not in the same currency as the card issued and request authorisation to proceed.

The details relating to the conversion rates to be applied may equally be applied on the merchant site may equally be dynamically presented to the merchant site by the remote processor as required or requested by the vendor site. Obviously, this represents a significant improvement over known systems in that the event of a sudden fluctuation in exchange markets significantly affecting a conversion rate between currencies the remote server may deliver exchange rate information. It is anticipated that the delivery of such information will be prioritised so that the greatest volume of transactions being processed in a given time frame are service first.

It will be appreciated that the systems described, both relating to the exchange rates being supplied on spot and fixed term basis may be applied in an M-Commerce environment. In this situation, the provision of near instantaneous exchange rate data may be supplied.

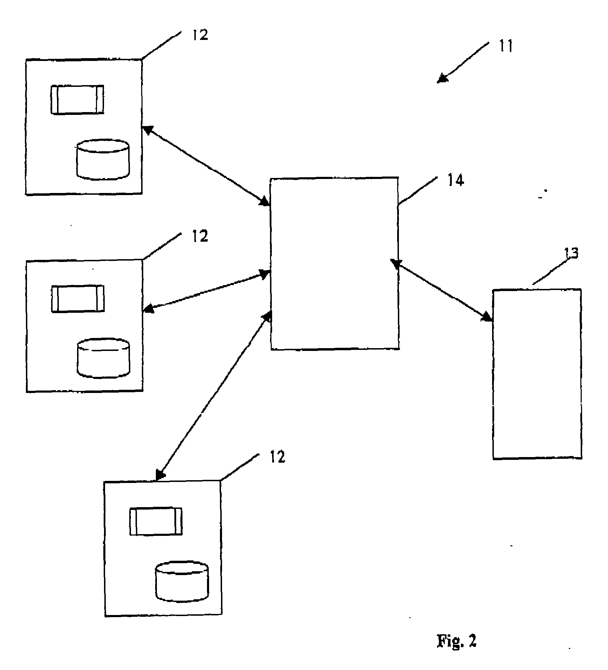

Referring now to Fig. 2, for the purposes of this description, specific system architectures, processors, memory devices, timing and performance details have been omitted in order not to unnecessarily obscure the present invention. Thus, the constituent components of the invention have been described in terms of functionality, as many ways of achieving said functionality will be readily apparent to those skilled in the art.

An inter-computer communications apparatus according to the invention indicated generally by the reference numeral 10 is connected between a number of merchant systems 12 each having an associated processor and datastore and a client system 13 to facilitate communications using Transmission Control Protocol/Internet Protocol. (TCP/IP) or similar connection protocols. The apparatus 11 connects to the merchant systems 12 using a server 14, which processes Hypertext Transport Protocol (HTTP) requests received from the systems 12. HTTP is the protocol that is used to submit these requests from the systems 12 to the server 14, which in turn uses the same protocol to return the results of that request to the system 12 or merchant. HTTP is the foundation of the World Wide Web (WWW) where the simplest through to the most complex of browsers use HTTP to issue requests to WWW servers and to receive and to display the response to those requests.

When a cardholder wishes to make a purchase at a merchant site the card information is transmitted to the merchant system 12. The merchant system 12 then responds and requests the cardholder to select a quotation currency selection. The cardholder selects from a predefined list of billing currencies and transmits this request to the merchant system 12, this dataword is stored in a temporary security buffer. The merchant system 12 receives the card information and routes the bit stream received on an appropriate channel with a correctly authorised protocol to a parsing register. The bitstream is then parsed to extract an originating country identification word from the bitstream. The extracted identification word is then passed to a comparator for comparison with a predefined index stack of identification words resident of the datastore. When a match is detected a conversion multiplier associated with the matched word is retrieved from the datastore. Before the multiplier is applied to the currency amount of the transaction the matched word is compared with the contents of the temporary security buffer. In the event of a no match condition, further authentication of the transaction request maybe sought. Alternatively, in the event of such a mismatch a user warning may be generated and routed to the cardholder to seek verification from the user that billing of the transaction is not in the same currency as the card issued and request authorisation to proceed. With the necessary authentication complete, the multiplier is applied to the transaction value and is quoted to the cardholder in the currency of choice. Subject to the process described above this will generally be in the cardholder's native currency. By the relatively simple expedient of providing country identifiers and associated multipliers to the merchant, the cardholder is immediately aware of the final billing amount at the time of making the purchase and is not required to await a statement from a card-issuing bank which of involves a considerable delay. Furthermore the risk of disputed transactions and associated chargeback to the merchant is eliminated where such disputes arise from the application of a disputed conversion rate.

The charge for the transaction in the currency of the merchant is then transmitted to the merchant acquirer together with the amount in all relevant currencies for processing through the normal credit card transaction processing system namely proceeding to a credit card debit acquirer and from that acquirer through the various credit card issuing schemes back to the issuing bank. This issuing bank is the bank, which issued the card to the cardholder in the cardholder currency. The card holders account has an amount equivalent to the authorisation sought removed from the available card credit and authorisation for the request is returned through the credit card issuing bank, through the card schemes and though the debit acquirer to the remote server. A record of the amount of the transaction in cardholder currency and in merchant currency is stored merchant site. Once authorisation has been received by the merchant the transaction can be processed in the normal way.

At a preset interval or on request from the merchant site transaction details are transferred from the merchant to the server 14. When the transaction data is received from a given merchant, a file is created for transaction details, this file contains a conversion rate for each transaction into each and every currency operated by the server 14. This record is then transmitted, including details of the card issuer and card-issuing bank, to the acquiring bank. From the acquiring bank, the data is directed automatically onto the various credit card issuing banks. These amounts are then reconciled against the cardholder's accounts and payment is returned through the issuing bank and acquirer to server. When the server 14 receives the transaction, the value of the transaction is returned to the server 14 in cardholder currency and is then converted at the appropriate rate to the merchant currency. The merchant currency amount is then settled to the merchants account in payment of the transaction. This amount maybe net of merchant service charge (MSC) or maybe a gross figure.

When the transaction is originally processed the rate of conversion from the merchant currency to the cardholder currency is obtained on a three-day basis, this is the figure used plus a foreign exchange margin to convert from the merchant currency to the cardholder currency. When reconciling the account, the local processor, extracts details of this transaction and obtains a daily spot rate for conversion. In the event of such a transaction operated on the spot daily rate would yield a not benefit in conversion values then this excess is credited to a local account.

Seulement of the account with the merchant may have an additional component in that the profit margin on a given transaction may be stored in a foreign exchange profit holding account. This profit holding account may issue a dividend on each transaction in relation to the parties involved namely the remote server and the merchant operating the system.

In addition to the process described above it will be understood that the server may store locally, information relating to the currency of the card presented for a given transaction. In this situation as the transaction is being processed by the merchant, it is routed to the server and details relating to the currency of the card account are retrieved from a datastore associated with the remote server.

The remainder of the operation is similar to that described above with the exception that the conversion from the merchant currency to the cardholder currency is performed at the server 14. Obviously in this situation, the details relating to the transaction can be stored locally on the remote server and there is no requirement for an upload from the merchant point of sale apparatus.

In addition to the method for processing of credit card transactions described, it will be understood that in certain environments such as in the rental of motor cars it will be possible for the electronic point of sale to process the transaction and transfer the currency in merchant currency in both in a batch process to the remote server for processing, conversion and onward processing of the transactions. The system may also work for Card Present, where the card issuing authorities permits local conversion of the currency.

Details relating to transaction to be processed maybe downloaded periodically or contemporaneously with a batch process to transfer information relating to country identification codes and exchange rates to be transferred from the server 14 to the merchant site 12. Additionally, details relating to fraudulent use of credit cards maybe also be transferred from the local server to the point of sale apparatus if required. Such details may include lists of stolen credit card numbers so that detection of the cards is immediate at the point of sale without reference to the server 14.

The information updated on the merchant system 12 includes details on currency identification datawords associated with particular credit card numbers, conversion rates for range of currencies for which transactions are processed and details relating to stolen or fraudulently used credit cards. The details relating to the conversion rates to be applied may equally be applied on the merchant site may equally be dynamically presented to the merchant site by the server 14 as required of requested by the vendor site. Obviously, this represents a significant improvement over known systems in that the event of a sudden fluctuation in exchange markets significantly affecting a conversion rate between currencies the remote server may deliver exchange rate information. It is anticipated that the delivery of such information will be prioritised so that the greatest volume of transactions being processed in a given time frame are service first.

It will be appreciated that the systems described, both relating to the exchange rates being supplied on spot and fixed term basis may be applied in an M-Commerce environment. In this situation, the provision of near instantaneous exchange rate data may be supplied.

The invention is not limited to the embodiment hereinbefore described, but may be varied in both construction and detail with the scope of the appended claims.

## Claims

1. An inter computer communications apparatus for use in an electronic commerce environment, the apparatus having
a processor and associated datastore for connection to a remote merchant system of the type having a processor and datastore; and
means for connection to a remote client system
wherein the remote merchant system is configured to perform the steps of: -
receiving card information associated with a transaction request as a bitstream;
routing the received bitstream to a parsing register;
parsing register contents to extract an originating country identification word;
comparing the extracted identification word with a predefined index stack of identification words resident on the datastore and in response to a match condition retrieving a conversion multiplier from the datastore;
generating a quotation currency selection request;
transmitting the generated request to the cardholder;
receiving a currency selection dataword and storing the dataword in a temporary security buffer;
comparing the contents of the temporary security buffer with the indexed stack contents in response to a matched condition and generating an authorisation signal or request for validation signal; and
applying the multiplier to a transaction value to produce a final billing value for transmission to the cardholder and the client system.

2. A method for processing transactions in an electronic commerce environment comprising the steps of: -
receiving card information associated with a transaction request as a bitstream;
routing the received bitstream to a parsing register;
parsing register contents to extract an originating country identification word;
generating a quotation currency selection request;
transmitting the generated request to the cardholder;
receiving a currency selection dataword and storing the dataword in a temporary security buffer;
comparing an extracted identification word with a predefined index stack of identification words resident on the datastore in response to a match condition retrieving a conversion multiplier from the datastore;
comparing the contents of the temporary security buffer with the indexed stack contents in response to a matched condition and generating an authorisation signal or request for validation signal; and
applying the multiplier to a transaction value in response to an authorization signal to produce a final billing value for transmission to a cardholder and a client system.

3. A method as claimed in Claim 2 wherein datastore contents are periodically updated from a remote server.

4. A method for processing a transaction using: -
a point-of-sale apparatus;
a remote processor,
an acquiring bank scheme; and
an issuing bank authority
wherein conversion of the transaction to a financial amount into a currency associated with a card is performed at the point of sale apparatus and
wherein the conversion of the transaction, comprises the steps of: -
extracting a credit card number from the presented transaction;
parsing the extracted credit card number to extract a country code identification word;
comparing the extracted identification word with a pre-defined index stack of identification words resident on a local database and in response to a match condition, retrieving a conversion rate multiplier associated with the country code identification word from the local datastore;
generating a quotation currency selection request;
transmitting the generated request to the cardholder;
receiving a currency selection dataword and storing the dataword in a temporary security buffer;
comparing the contents of the temporary security buffer with the indexed stack contents in response to a matched condition and generating an authorisation signal or request for validation signal; and
applying the retrieved conversion rate multiplier to a local merchant currency amount to generate a billing figure.

5. A method as claimed in Claim 4 including the further steps of: -
receiving a connection request from a point of sale apparatus at a remote processor;
retrieving exchange and associated data from a storage device of the remote processor; and
replacing contents of the datastore with the retrieved data.

6. An apparatus for processing a credit card transaction comprising:-
a point-of-sale apparatus;
a remote processor;
an acquiring bank scheme; and
an issuing bank authority
wherein the point of sale apparatus incorporates means for converting the transaction to a financial amount into a currency associated with a card and
wherein the means for converting the transaction, comprises: -
means fur extracting a credit card number from the presented transaction;
means for parsing the extracted credit card number to extract a country code identification word;
means for comparing the extracted identification word with a predefined index stack of identification words resident on a local datastore;
means for retrieving a conversion rate multiplier associated with the country code identification word from the local datastore in response to a match condition between the extracted word and the predefined index stack of identification words;
means fnr generating a quotation currency selection request;
means for transmitting the generated request to the cardholder;
means for receiving a currency selection dataword and storing the dataword in a temporary security buffer;
means for comparing the contents of the temporary security buffer with the indexed stack contents in response to a matched condition and generating an authorisation signal or request for validation signal; and
means for applying the retrieved conversion rate multiplier to a local merchant currency amount to generate a billing figure.

7. An apparatus for processing a credit card transaction as claimed in Claim 6 including:-
means for receiving a connection request from a point of sale apparatus at a remote processor,
means for retrieving exchange and associated data from a storage device of the remote processor; and
means for replacing contents of the datastore with the retrieved data.

8. An apparatus for processing a credit card transaction as claimed in any one of Claims 6 or 7 in which the point of sale apparatus comprises a card swipe terminal unit or means for extracting the required information from a credit card internet transaction.
